# EUROPEAN PATENT SPECIFICATION

(11) **EP 2 883 443 B1**
(45) Date of publication and mention of the grant of the patent: **28.12.2016**
(21) Application number: 14194249.0
(22) Date of filing: 21.11.2014
(51) Int. Cl.: A01G 17/02

(54) **Leaf stripping machine**
Entlaubungsmaschine
Machine d'effeuillage

(30) Priority: 16.12.2013 IT MI20132096
(43) Date of publication of application: 17.06.2015
(73) Proprietor: Spezia S.r.l., 29010 Pianello Val Tidone (PC) (IT)
(72) Inventor: Spezia, Giancarlo, I-29010 Nibbiano (PC) (IT)
(74) Representative: Giavarini, Francesco

(56) References cited:
- EP-A1- 0 898 877
- DE-A1- 4 032 489
- FR-A1- 2 838 285
- FR-A1- 2 965 701
- US-A1- 2005 081 501

## Description

The present invention relates to an improved leaf stripping machine for tree crops. The invention also relates to a method for leaf removal from tree crops performed with said machine.

The field of the present invention is that of leaf stripping machines which are used to remove the foliage from trees growing in rows (e.g. vineyards and orchards). It is known that in row plantations it is often necessary to eliminate a certain number of leaves in the area of the plant corresponding to the presence of the fruit. Such operation is performed in order to obtain more healthy fruit resulting from improved ventilation and solar exposure due to the elimination of excess foliage, and to promote the effectiveness of pesticide treatment due to a greater exposure of the fruit the treatment liquids.

For this purpose leaf removing machines are used, said machines being equipped with a pair of rollers arranged side by side and cooperating with each other. As the rollers rotate and the machine moves forward along the row, the leaves are gripped and pulled off the plant. In order to facilitate gripping of the rollers on the foliage, a known technique is to generate an air suction flow causing the leaves to adhere to the surfaces of the machine rollers. Leaf removing machines are also known in which the foliage is removed by means of appropriate knives that detach the leaves.

In this last type of machine, it is possible to control the backward or forward movement of the vegetation cutting system, thus following the profile of the foliage which is often irregular. For said purpose the leaf removing machine is provided with appropriate sensor devices which control the movements of the cutting head away from and towards the vegetation front, with an on/off type control, or with constant speed of the cutting head movements.

All the embodiments described above have the drawback of causing damage to the fruit, which often interferes with the leaf removal system, whether formed of rotating rollers or cutting knives.

A further drawback encountered in the known leaf removal systems is the non-uniformity of the treatment in relation to the actual profile of the vegetation, since said systems do not take into account either the greater or lesser extent of the variance of the vegetation profile with respect to the row lines, or the presence of fruit protruding from the canopy. An example of known leaf removal machines is described in EP 0898877 A1.

The main object of the present invention is to overcome the drawbacks of the known art described above. In particular, the invention is intended to provide a leaf stripping machine and relative process which allow leaf removal to be performed without causing damage to the fruit.

A further object of the present invention is to provide a leaf stripping machine which allows an optimal distance to be maintained between the cutting head and the vegetation with the fruit, also in the case of significant variance of the canopy from the row line.

These and further objects are achieved by a leaf stripping machine for removing leaves from tree crops as defined in the appended claims.

In a further aspect, the present invention also relates to a process of leaf removal from tree crops carried out with a machine as described herein, the process being characterised in that the fruit is moved away from the operating head, thus protecting it from damage, by means of the thrust action of a screen against the vegetation and the fruit, said screen operating between a position of complete closure with respect to the operating head and a position of complete opening with respect to said operating head.

Thus, the machine of the invention, thanks to its protective screen and thrust sensor, allows a thrust action to be exerted on the fruit, moving it away from the leaf remover head, which is sufficient to keep the fruit away from the cutting members during their transit, thus avoiding damage.

A further advantage is represented by the fact that the same protective screen and sensor also can act as a means for controlling the speed of the cutting head movements towards and away from the canopy, according to the extent of the variance of the vegetation profile with respect to the row line.

These and further objects, advantages and characteristics will become clear from the following description of a preferred method of producing the machine and implementing the process of the invention illustrated, by way of non-limiting example, in the figures of the accompanying drawings in which:
- figure 1 illustrates in an overall perspective view the leaf remover machine of the invention;
- figure 2 illustrates the machine of figure 1 in a view from the rear side;

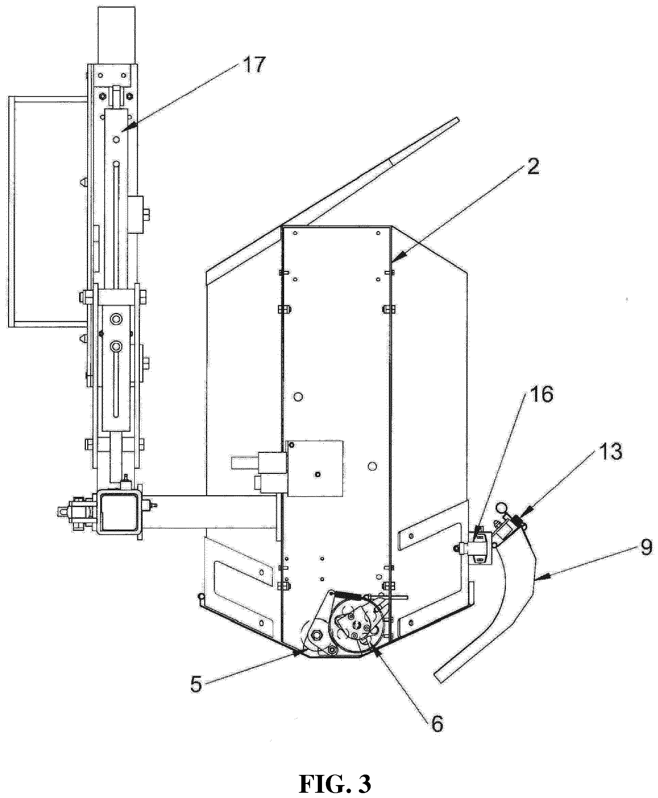

- figure 3 illustrates the machine of figure 2 in an overhead view;
- figure 4 illustrates an exploded view of the sensor screen of the machine of the preceding figures;
- figure 5 illustrates the angular movements to which the sensor screen of figure 4 is subject during leaf removal;
- figures 6a, 6b, 6c, 6d and 6e illustrate the sequence of movements of the sensor screen of figure 4 during the leaf removal process;
- figures 7 and 8 illustrate the position of the sensor screen of figures 6b and 6c in relation to the profile of the vegetation and position of the fruit;
- figure 9 illustrates a block diagram of the control system for controlling the cutting head movements and the rotation speed of the leaf remover rollers, according to the angular position of the sensor screen.

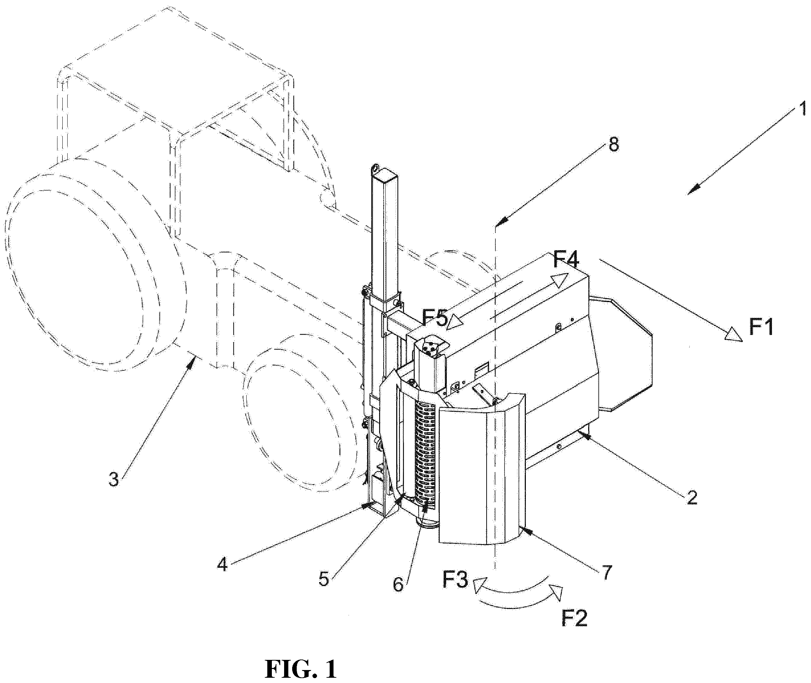

With reference to the attached figure, the machine of the invention, generally designated by the reference number 1 in figure 1, comprises an operating head 2 supported on a transport vehicle 3 by means of a frame 4. The operating head 2 comprises in particular rotating rollers 5, 6 for pulling off the foliage and a device 7 which acts as a protective screen for the fruit and as a sensor detecting the distance of the vegetation from the above-mentioned rollers 5, 6. The arrow F1 of figure 1 indicates the direction of forward movement of the machine along the row, while the arrows F2 and F3 represent the rotation movements of the device 7 about the axis 8 hinging the same to the operating head 2.

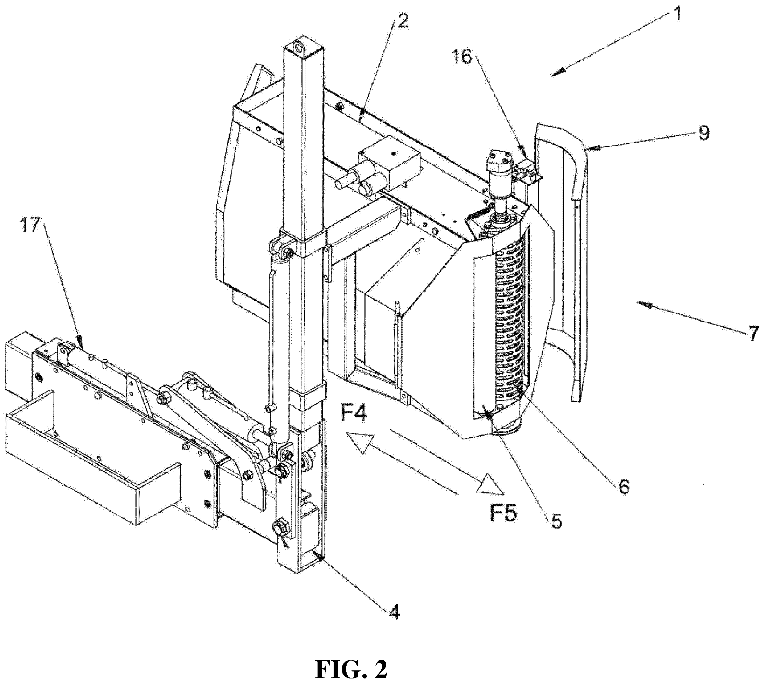

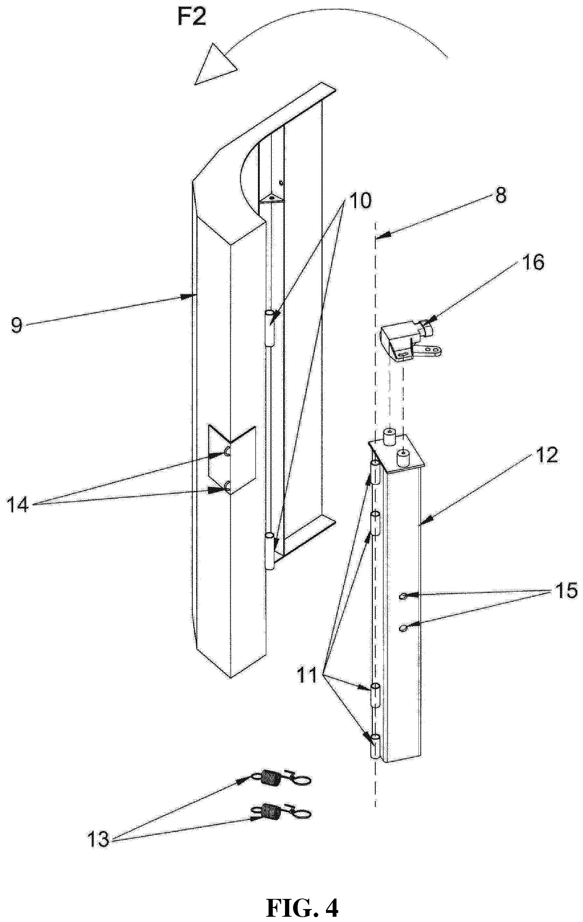

As better illustrated in figures 2 and 4, the device 7 of the machine 1 of the invention comprises a screen 9, substantially formed of a shaped metal or plastic shield which is mounted rotatable about the axis of rotation 8 defined by the hinge formed by the pins (not shown) which are housed inside bushes 10 provided on the inner surface of the screen 9 and corresponding bushes 11 mounted on the bracket 12 integral with the operating head 2. Traction springs 13, acting between the connection points 14 to the screen 9 and the connection points 15 to the bracket 12, cause elastic opening of the screen 9 in the rotation direction indicated by F2 in figure 4. The opening angle of the screen 9 with respect to the operating head 2 is detected by a sensor 16 mounted on the bracket 12.

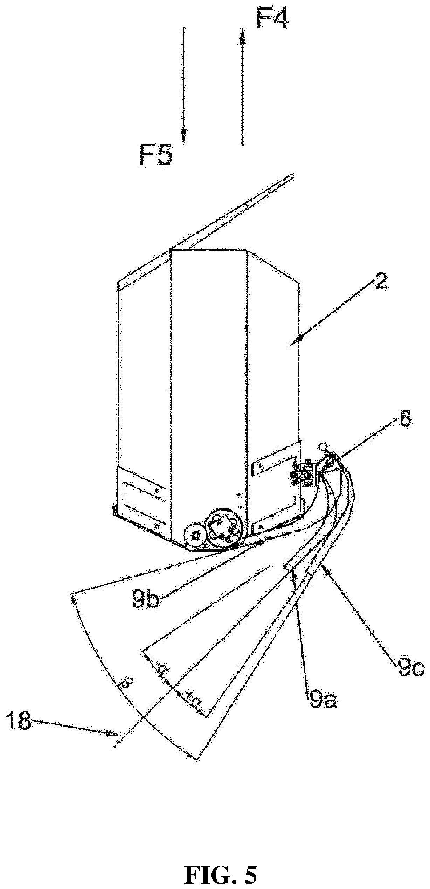

The hydraulic cylinder 17 in figure 2, mounted on the frame 4 of the machine of the invention, facilitates the movements of the head 2 in the directions F4 (moving away from the vegetation front) and F5 (moving towards the vegetation front). The screen 9 operates between the position 9b of complete closure against the operating head 2, due to the pressing action exerted by the leaves to be removed, and position 9c of complete opening, corresponding to the state of non-interference with the vegetation, as illustrated in figure 5. The angle β between the above-mentioned positions 9b and 9c is preferably at least 10°.

In the normal operating condition of the machine 1, the screen 9 is pushed by the vegetation to rotate within an angle ± α with respect to the axis 18 of figure 5, the latter corresponding to a predetermined reference position 9a of the screen 9 in which the foliage presses against the screen 9 and the operating head 2 is at the correct distance from the vegetation to be defoliated.

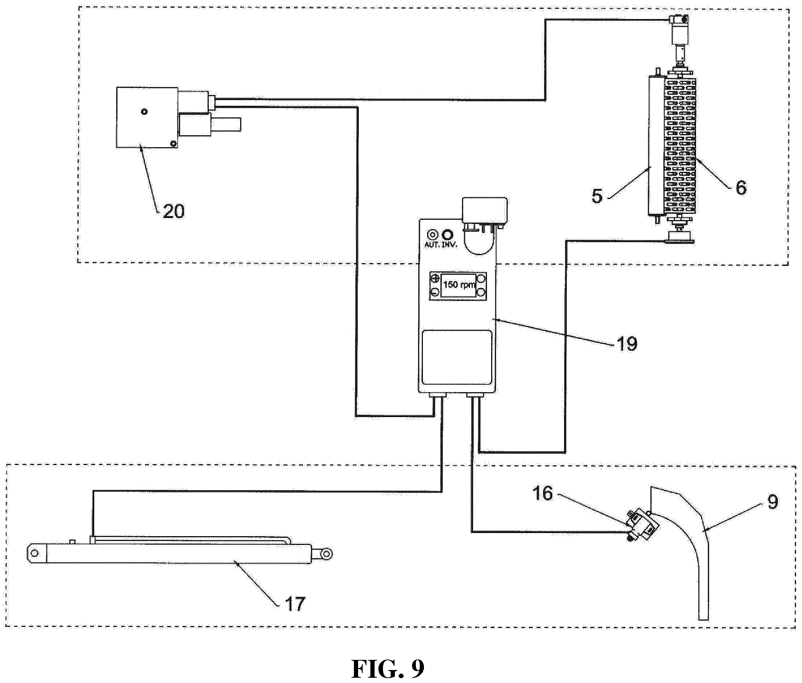

During operation, the angles ± α of the screen 9 with respect to the axis 18 are detected by the sensor 16 and are read by the control electronics 19 illustrated in the diagram of figure 9, thus controlling the movement of the operating head 2 away from (F4) and towards (F5) the vegetation front.

When said angles ± α are below a predetermined value, the operating head 2 is moved away from (F4) and towards (F5) the vegetation front at a reduced speed V1, which is preferably less than 10 cm/sec.

When the variances of the screen 9 from the axis 18 exceed the above-mentioned predetermined angles ± α, but always remaining within the angle β between the described positions 9b and 9c, an analogous movements (F4) and (F5) of the operating head 2 is carried out, but at a speed V2 which is higher than the preceding speed V1.

In other words, in the machine according to the invention, the speed of the cutting head movements towards and away from the canopy is controlled depending on the thrust exerted by the vegetation on the screen 9, and therefore with respect to the displacement of said screen 9 with respect to a reference position 9a.

Furthermore, closing of the screen 9 beyond the position 9a and in the direction of the operating head 2 (arrow F3 of figure1) can be read by the sensor 16 and the rotation speed of the rollers 5 and 6 can be increased by the corresponding command given by the electronics 19 to the solenoid valve 20 of figure 9.

Thus, in the machine according to the present invention, the leaf-stripping action of the operating head 2 can be adapted according to the thrust exerted by the vegetation on the screen 9, i.e. depending on the displacement of said screen 9 with respect to a reference position 9a.

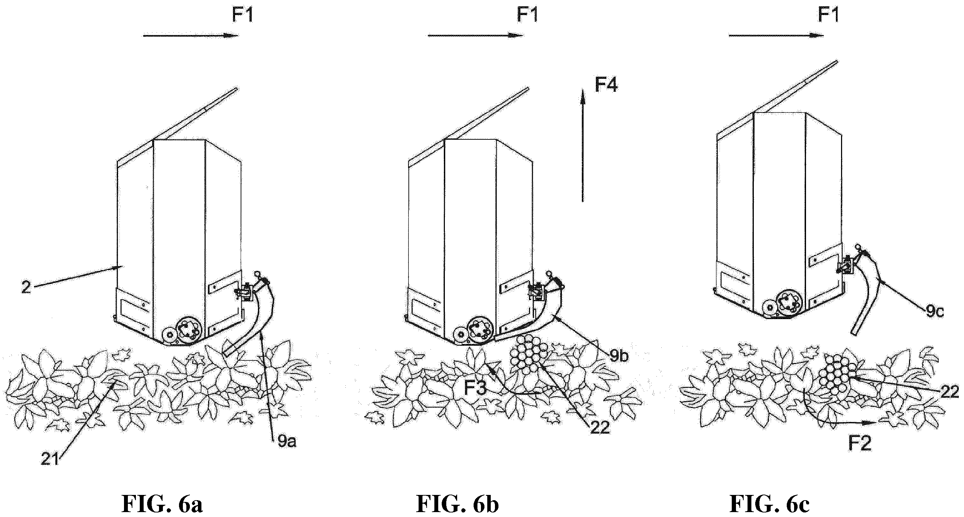

In operation of the machine of the invention, the screen 9 is initially in the position 9a of figures 5 and 6a, in which it is resting on the vegetation 21 and the operating head 2 is at the optimal leaf removal distance.

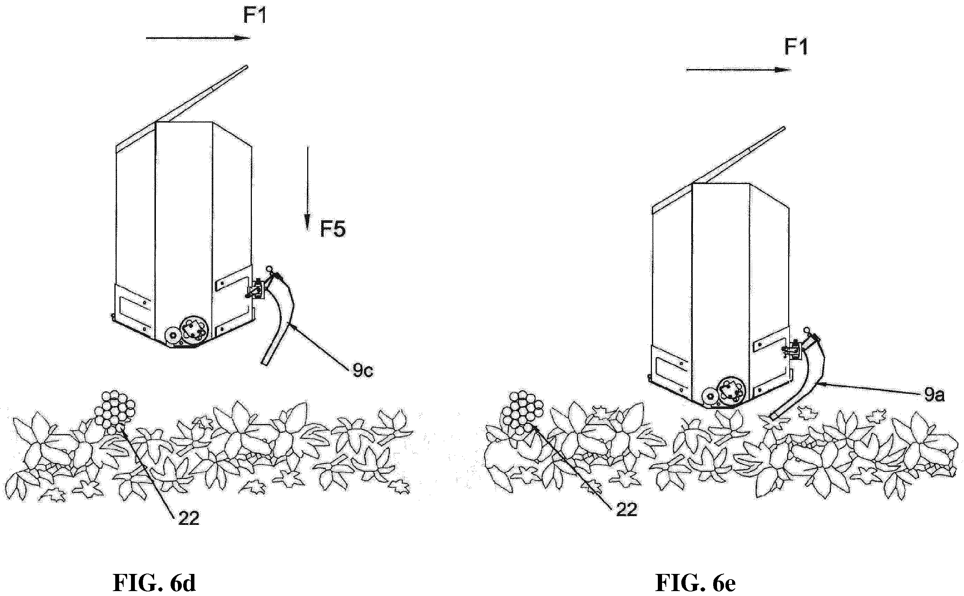

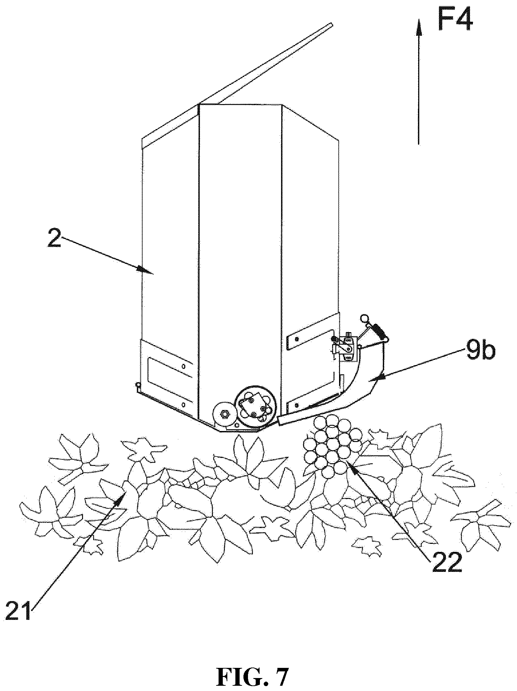

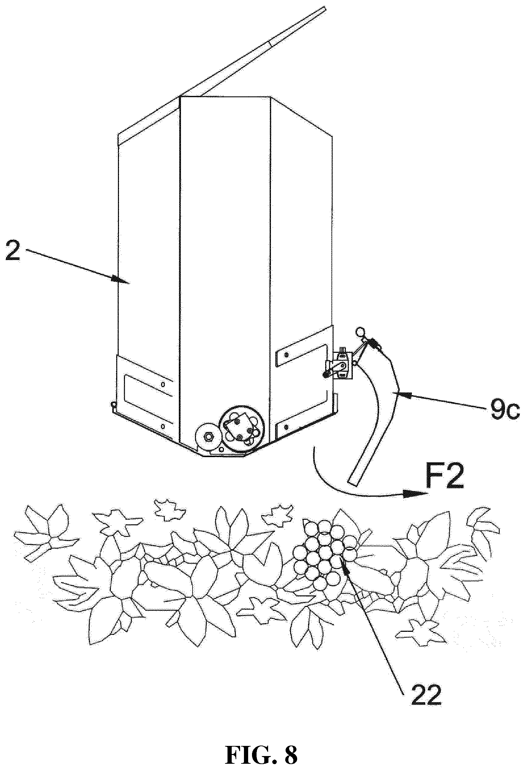

When the screen 9 is pressed further towards the operating head 2 (for example due to the additional resistance of the fruit 22, or due to the presence of a mass of vegetation 2 which protrudes from the front of the row) it sets to the position 9b of figures 5 and 6b by rotation according to the arrow F3 of figure 1. In these conditions the electronics 19 command rapid movement of the operating head 2 away from the vegetation front 21 (arrow F4) while the screen 9 re-opens, due to the effect of the springs 13, in the direction of the arrow F2 of figure 1. In this way the fruit 22 is positioned well away from the puller rollers 5,6 due to the combined action of movement of the operating head 2 away from the row (arrow F4 of figure 6b) and the thrust exerted by said screen 9 on the fruit 22 (arrow F2 of figure 6c). In this way, when the screen 9 returns to its initial position 9a, the above-mentioned rollers 5 and 6 have already passed in front of the fruit 22, without interfering with it (figures 6d, 6e). The figures 7 and 8 show the detail of the operating modes described above, where in particular figure 8 illustrates the thrust action F2 exerted by the screen 9 towards the fruit 22 in order to move said fruit away.

As previously said, the sensor 16 coordinates the distance of the operating head 2 from the vegetation front 21 with the described angular positions of the screen 9. Furthermore, the speed of the movements F4 and F5 of the operating head 2 and/or the rotation speed of the puller rollers 5,6 are coordinated according to the extent of the variances of the screen 9 with respect to its working position 9a, thus giving the leaf removal operation the required uniformity.

The invention, as described above and illustrated in the accompanying figures, can be modified to obtain variations.

Thus, for example, the leaf removal means provided on the operating head 2 could consist of knife cutting systems, cooperating with a suction flow which draws the foliage towards the operating head. Furthermore, the traction springs 13 could be replaced by corresponding thrust or torsion springs, or electromechanical devices, such as a controlled motor, always operating in the direction of opening of the screen 9 with respect to the operating head 2.

## Claims

1. Leaf stripping machine for removing leaves from tree crops comprising an operating head (2) provided with leaf removal means, and further comprising a sensor device (7) for detecting the presence of the vegetation (21) and protecting the fruit (22) from contact with the above-mentioned leaf removal means, comprising a screen (9) mounted rotatable on the operating head (2) about an axis of rotation (8) due to the thrust exerted by the vegetation (21) contrasted by the action of thrust means, preferably springs (13), acting on said screen (9), characterizsed in that said screen (9) operating between a position (9b) of complete closure on the operating head (2) and a position (9c) of complete opening with respect to said operating head (2) over an operating angle (β).

2. Machine according to claim 1, **characterised in that** the size of said angle (β) between said positions (9b, 9c) is at least 10°.

3. Machine according to claim 1 or 2, **characterised in that** it furthermore comprises sensor means (16) adapted to detect the angular position of the screen (9) with respect to the operating head (2).

4. Machine according to claim 3, **characterised in that** it comprises electronics for controlling the speed of the movement of said operating head (2) towards and away from the vegetation, depending on the angular position of said screen (9) with respect to said operating head (2).

5. Machine according to claim 3 or 4, **characterised in that** it comprises electronics for controlling the extent of the leaf-stripping action of said operating head (2), depending on the angular position of said screen (9) with respect to said operating head (2).

6. Machine according to one or more of the previous claims, **characterised in that** said operating head (2) is moved away from the vegetation front (F4) or towards the vegetation front (F5) at a speed (V1), which is preferably below 10 cm/sec, when the displacement of said screen (9) with respect to a predetermined reference position (9a) is lower than a pre-defined angle (±α), and at a speed (V2) greater than (V1), when the displacement of said screen (9) with respect to said predetermined reference position (9a) is greater than said pre-defined angle (±α).

7. Machine according to one or more of the previous claims, **characterised in that** it comprise a hydraulic cylinder (17) for moving the operating head (2) with respect to the vegetation front (21) to be defoliated.

8. Machine according to claim 7, **characterised in that** it comprises electronics (19) for controlling the above-mentioned hydraulic cylinder (17) and a solenoid valve (20) for controlling rotation of rollers (5,6) which remove the leaves from the vegetation.

9. Process of leaf removal from tree crops with the machine according to one or more of the preceding claims, **characterised in that** fruit (22) is moved away from the operating head (2), by means of the thrust action (F2) of the screen (9) against the vegetation (21) and the fruit (22).

10. Process according to claim 9, **characterised in that** said away movement is also obtained by shifting (F4) the operating head (2) from the vegetation front, said shifting being controlled by said sensor means (16) for detecting the position of the screen (9) with respect to the operating head (2).

11. Process according to claim 10, **characterised in that** the movement of the operating head (2) away from the vegetation front (F4) and towards the vegetation front (F5) is obtained at a speed (V1), which is preferably below 10 cm/sec, when the displacement of said screen (9) with respect to a predetermined reference position (9a) is lower than a pre-defined angle (±α).

12. Process according to claim 11, **characterised in that** the movement of the operating head (2) away from the vegetation front (F4) and towards the vegetation front (F5) is obtained at a speed (V2) greater than (V1), when the displacement of said screen (9) with respect to a predetermined reference position (9a) is greater than said pre-defined angle (±α).

## Patentansprüche

1. Entblätterungsmaschine zum Entfernen von Blättern von Baumgewächsen, aufweisend einen Betriebskopf (2), der mit Blattentfernungseinrichtungen versehen ist, und ferner aufweisend eine Sensorvorrichtung (7) zum Erfassen des Vorhandenseins der Vegetation (21) und Schützen der Frucht (22) vor dem Kontakt mit den oben genannten Blattentfernungseinrichtungen, aufweisend einen Schirm (9), der an dem Betriebskopf (2) befestigt und durch den von der Vegetation (21) ausgeübten Schwung, dem die Wirkung von Schwungeinrichtungen, vorzugsweise Federn (13), entgegensteht, die auf den Schirm (9) wirken, um eine Drehachse (8) drehbar ist,
**dadurch gekennzeichnet, dass** der Schirm (9) zwischen einer Position (9b) der kompletten Schließung an dem Betriebskopf (2) und einer Position (9c) der kompletten Öffnung im Verhältnis zu dem Betriebskopf (2) über einen Betriebswinkel (β) betreibbar ist.

2. Maschine nach Anspruch 1, **dadurch gekennzeichnet, dass** die Größe des Winkels (β) zwischen den Positionen (9b, 9c) zumindest 10° beträgt.

3. Maschine nach Anspruch 1 oder 2, **dadurch gekennzeichnet, dass** sie ferner eine Sensoreinrichtung (16) aufweist, die darauf ausgelegt ist, die Winkelposition des Schirms (9) im Verhältnis zu dem Betriebskopf (2) zu erfassen.

4. Maschine nach Anspruch 3, **dadurch gekennzeichnet, dass** sie eine Elektronik zum Steuern der Bewegungsgeschwindigkeit des Betriebskopfs (2) in Richtung zur und weg von der Vegetation aufweist, abhängig von der Winkelposition des Schirms (9) im Verhältnis zu dem Betriebskopf (2).

5. Maschine nach Anspruch 3 oder 4, **dadurch gekennzeichnet, dass** sie eine Elektronik zum Steuern des Ausmaßes des Entblätterungsvorgangs des Betriebskopfs (2) aufweist, abhängig von der Winkelposition des Schirms (9) im Verhältnis zu dem Betriebskopf (2).

6. Maschine nach einem oder mehreren der vorgenannten Ansprüche, **dadurch gekennzeichnet, dass** der Betriebskopf (2) mit einer Geschwindigkeit (V1) von der Vegetationsvorderseite (F4) weg bewegt oder in Richtung der Vegetationsvorderseite (F5) bewegt wird, die vorzugsweise unter 10 cm/sec liegt, wenn die Verdrängung des Schirms (9) im Verhältnis zu einer vorgegebenen Referenzposition (9a) niedriger ist als ein vordefinierter Winkel (±α), und mit einer Geschwindigkeit (V2), die höher ist als (V1), wenn die Verdrängung des Schirms (9) im Verhältnis zu der vorgegebenen Referenzposition (9a) größer ist als der vordefinierte Winkel (±α).

7. Maschine nach einem oder mehreren der vorgenannten Ansprüche, **dadurch gekennzeichnet, dass** sie einen Hydraulikzylinder (17) zum Bewegen des Betriebskopfs (2) im Verhältnis zu der Vegetationsvorderseite (21), die zu entlauben ist, aufweist.

8. Maschine nach Anspruch 7, **dadurch gekennzeichnet, dass** sie eine Elektronik (19) zum Steuern des oben genannten Hydraulikzylinders (17) und ein Magnetventil (20) zum Steuern der Drehung von Walzen (5, 6), die die Blätter von der Vegetation entfernen, aufweist.

9. Verfahren zum Blattentfernen von Baumgewächsen mit der Maschine nach einem oder mehreren der vorgenannten Ansprüche, **dadurch gekennzeichnet, dass** die Frucht (22) durch den Schwungvorgang (F2) des Schirms (9) gegen die Vegetation (21) und die Frucht (22) von dem Betriebskopf (2) wegbewegt wird.

10. Verfahren nach Anspruch 9, **dadurch gekennzeichnet, dass** die Wegbewegung auch erhalten wird, indem der Betriebskopf (2) von der Vegetationsvorderseite (F4) weg verschoben wird, wobei das Verschieben durch die Sensoreinrichtung (16) zum Erfassen der Position des Schirms (9) im Verhältnis zu dem Betriebskopf (2) gesteuert wird.

11. Verfahren nach Anspruch 10, **dadurch gekennzeichnet, dass** die Bewegung des Betriebskopfs (2) weg von der Vegetationsvorderseite (F4) und in Richtung der Vegetationsvorderseite (F5) mit einer Geschwindigkeit (V1) erfolgt, die vorzugsweise unter 10cm/sec liegt, wenn die Verdrängung des Schirms (9) im Verhältnis zu einer vorgegebenen Referenzposition (9a) niedriger ist als ein vorgegebener Winkel (±α).

12. Verfahren nach Anspruch 11, **dadurch gekennzeichnet, dass** die Bewegung des Betriebskopfs (2) weg von der Vegetationsvorderseite (F4) und in Richtung der Vegetationsvorderseite (F5) mit einer Geschwindigkeit (V2) erfolgt, die höher ist als (V1), wenn die Verdrängung des Schirms (9) im Verhältnis zu einer vorgegebenen Referenzposition (9a) größer ist als der vordefinierte Winkel (±α).

## Revendications

1. Machine d'effeuillage pour retirer les feuilles des cultures arbustives comprenant une tête de travail (2) prévue avec des moyens de retrait de feuille, et comprenant en outre un dispositif de capteur (7) pour détecter la présence de la végétation (21) et protéger le fruit (22) du contact avec les moyens de retrait de feuille mentionnés ci-dessus, comprenant un écran (9) monté en rotation sur la tête de travail (2) autour d'un axe de rotation (8) dû à la poussée exercée par la végétation (21) contrastée par l'action des moyens de poussée, de préférence des ressorts (13), agissant sur ledit écran (9), **caractérisée en ce que** ledit écran (9) fonctionne entre une position (9b) de fermeture totale sur la tête de travail (2) et une position (9c) d'ouverture totale par rapport à ladite tête de travail (2) sur un angle de travail (β).

2. Machine selon la revendication 1, **caractérisée en ce que** la taille dudit angle (β) entre lesdites positions (9b, 9c) est d'au moins 10°.

3. Machine selon la revendication 1 ou 2, **caractérisée en ce qu'**elle comprend en outre des moyens de capteur (16) adaptés pour détecter la position angulaire de l'écran (9) par rapport à la tête de travail (2).

4. Machine selon la revendication 3, **caractérisée en ce qu'**elle comprend de l'électronique pour contrôler la vitesse du mouvement de ladite tête de travail (2) vers et à distance de la végétation, en fonction de la position angulaire dudit écran (9) par rapport à ladite tête de travail (2).

5. Machine selon la revendication 3 ou 4, **caractérisée en ce qu'**elle comprend de l'électronique pour contrôler l'étendue de l'action d'effeuillage de ladite tête de travail (2) en fonction de la position angulaire dudit écran (9) par rapport à ladite tête de travail (2).

6. Machine selon une ou plusieurs des revendications précédentes, **caractérisée en ce que** ladite tête de travail (2) est éloignée de l'avant de la végétation (F4) ou rapprochée de l'avant de végétation (F5) à une vitesse (V1) qui est de préférence inférieure à 10 cm/sec, lorsque le déplacement dudit écran (9) par rapport à une position de référence prédéterminée (9a) est inférieur à un angle prédéfini (±α) et à une vitesse (V2) supérieure à (V1), lorsque le déplacement dudit écran (9) par rapport à ladite position de référence prédéterminée (9a) est supérieur audit angle prédéfini (±α).

7. Machine selon une ou plusieurs des revendications précédentes, **caractérisée en ce qu'**elle comprend un cylindre hydraulique (17) pour déplacer la tête de travail (2) par rapport à l'avant de végétation (21) à effeuiller.

8. Machine selon la revendication 7, **caractérisée en ce qu'**elle comprend de l'électronique (19) pour contrôler le cylindre hydraulique (17) mentionné ci-dessus et une électrovanne (20) pour contrôler la rotation des rouleaux (5, 6) qui retirent les feuilles de la végétation.

9. Procédé défeuillage des cultures arbustives avec la machine selon une ou plusieurs des revendications précédentes, **caractérisé en ce que** le fruit (22) est éloigné de la tête de travail (2) au moyen de l'action de poussée (F2) de l'écran (9) contre la végétation (21) et le fruit (22).

10. Procédé selon la revendication 9, **caractérisé en ce que** cet éloignement est également obtenu en déplaçant (F4) la tête de travail (2) de l'avant de la végétation, ledit déplacement étant contrôlé par lesdits moyens de capteur (16) pour détecter la position de l'écran (9) par rapport à la tête de travail (2).

11. Procédé selon la revendication 10, **caractérisé en ce que** le mouvement de tête de travail (2) à distance de l'avant de la végétation (F4) et vers l'avant de la végétation (F5) est obtenu à une vitesse (V1) qui est de préférence inférieure à 10 cm/sec, lorsque le déplacement dudit écran (9) par rapport à une position de référence prédéterminée (9a) est inférieur à un angle prédéfini (±α).

12. Procédé selon la revendication 11, **caractérisé en ce que** le mouvement de la tête de travail (2) à distance de l'avant de la végétation (F4) et vers l'avant de la végétation (F5) est obtenu à une vitesse (V2) supérieure à (V1), lorsque le déplacement dudit écran (9) par rapport à une position de référence prédéterminée (9a) est supérieur audit angle prédéfini (±α).
